# EUROPÄISCHE PATENTANMELDUNG

(11) **EP 1 431 360 A2**
(43) Veröffentlichungstag der Anmeldung: **23.06.2004**
(21) Anmeldenummer: 03027175.3
(22) Anmeldetag: 27.11.2003
(51) Int. Cl.: C09J 7/04

(54) **Auf sich selbst wickelbares Klebeband, seine Verwendung und Verfahren zu seiner Herstellung**

(30) Priorität: 18.12.2002 DE 10259616
(71) Anmelder: Coroplast Fritz Müller GmbH & Co. K.G., 42279 Wuppertal (DE)
(72) Erfinder: Lodde, Christoph, 44225 Dortmund (DE); Ommerborn, Dagmar, 42119 Wuppertal (DE)
(74) Vertreter: Zapf, Christoph, Dipl.-Ing.

(57) **Zusammenfassung**

Die Erfindung betrifft ein auf sich selbst wickelbares Klebeband mit einem aus einem thermisch verfestigten Vlies bestehenden bandförmigen Träger, der auf einer Seite mit einer druckempfindlichen acrylatbasierenden Klebebeschichtung versehen ist, eine Verwendung des Klebebandes und ein Verfahren zu seiner Herstellung. Um ein solches Klebeband zu schaffen, bei dem Vliese mit geringer Reißfestigkeit und geringem Flächengewicht einsetzbar sind, ohne dass eine zusätzliche Trennbeschichtung erfolgen müßte, wobei aber ein Verblocken, ein Flagging oder Faserausrisse beim Abwickeln des Bandes vermieden werden, wird vorgeschlagen, dass das Vlies ein Flächengewicht von 10 - 50 g/m², eine Banddicke von 0,15 - 0,40 mm, eine Reißfestigkeit von 10 - 35 N/cm und eine Reißdehnung von 40 - 75 % aufweist und daß die Klebebeschichtung aus einem chemisch oder durch ultraviolette Strahlung vemetzbaren Acrylatklebstoff besteht.

## Beschreibung

Die vorliegende Erfindung betrifft ein auf sich selbst wickelbares Klebeband mit einem aus einem thermisch verfestigten Vlies bestehenden bandförmigen Träger, der auf einer Seite mit einer druckempfindlichen acrylatbasierenden Klebebeschichtung versehen ist, eine Verwendung des Klebebandes und ein Verfahren zu seiner Herstellung.

Für textile Klebebänder werden zur Zeit folgende Träger eingesetzt: Zellwoll-Gewebe, Zellwoll-Gewebe mit Acrylatbeschichtung, Polyester-Gewebe, Polyester-Nähvliese, wasserstrahlverfestigte Polyester-Vliese, Spinnvlies mit einseitiger Kalandrierung, Vliese mit Trennmittelbeschichtung und Nadelvliese mit einer durch Anschmelzen verfestigten Rückseitenobertläche.

Insbesondere Zellwoll-Gewebeklebebänder haben den Nachteil, dass sie aufgrund des Zellwoll-Gewebes teuer und verrottbar sind. Dies trifft auch auf Zellwoll-Gewebe mit Acrylatbeschichtung zu, wobei die Acrylatbeschichtung des Trägers den Fertigungsaufwand noch erhöht. Die Polyester-Gewebeklebebänder weisen ebenfalls den Nachteil auf, dass sie aufgrund des eingesetzten Gewebes teuer sind, wobei der Preis den Herstellungsaufwand des Bandes einschließlich dessen des Trägermaterials widerspiegelt. Polyester-Nähvliese haben den Nachteil, dass sie eine offene Struktur besitzen, so dass leicht Flüssigkeiten hindurchdiffundieren können, was auch bei entsprechenden wasserstrahlverfestigten Vliesen der Fall ist.

Spinnvliese sind Faservliese aus Filamentfasem, die direkt aus der Spinnmasse in einem kontinuierlichen Prozeß hergestellt werden. Der Herstellungsprozeß setzt sich aus mehreren aneinander gereihten Teilprozessen zusammen:
(a) Extrudieren und Schmelzen der Polymere,
(b) Spinnen der Fasern,
(c) Verstrecken der Fasern,
(d) Ablegen der Fasern auf einem Förderband und
(e) Verfestigung des Vlieses.

Die Verfestigung des Vlieses kann auf mechanischem (Vernadeln), thermischen (Kalander), sowie chemischen Wege (Bindemittel) erfolgen. Zur Herstellung von Spinnvliesen können grundsätzlich alle Polymere eingesetzt werden, welche sich im Trocken- oder Schmelzspinnverfahren verarbeiten lassen, z. B. Polypropylen, Polyethylen, Polyester. Auch Polymere, die im Naßspinnverfahren (z. B. Polyacrylnitril) verarbeitet werden, können zum Einsatz kommen.

Ein bekanntes Verfahren zur Herstellung eines auf sich selbst gewickelten Klebebandes der eingangs beschriebenen Art, umfaßt somit die Verfahrensschritte
- Herstellung eines aus einem Spinnvlies bestehenden Trägers unter Praktizierung der vorgenannten Verfahrensschritte (a) bis (e),
- Auftragung einer Klebebeschichtung auf den Träger,
- Aufwickeln des Bandes und
- Konfektionierung des Bandes.

Aus der DE 195 23 494 A1 ist die Verwendung eines Klebebandes der eingangs genannten Art mit einem aus Polypropylen bestehenden, einseitig mit einer Naturkautschuk- oder Acrylat-Klebebeschichtung versehenen Träger aus Spinnvlies zum Bandagieren von Kabelbäumen bekannt, wobei das Vlies mit Hilfe eines Kalanders thermisch verfestigt und geprägt ist und ein Vliesgewicht von 60 bis 100 g/m², eine Vliesdicke von 400 bis 600 µm, eine Fadenfeinheit von 2 dtex bis 7 dtex, eine Reißkraft von 200 N/(5 cm) bis 270 N/(5 cm) und eine Reißdehnung von 55% bis 85%, aufweist. Für die Kalandrierung wird bekanntermaßen eine Prägewalze mit einer Prägefläche von 10% bis 30% verwendet. Der Nachteil dieser Fertigungs-Variante besteht darin, dass die auf diese Weise hergestellten Klebebänder bisher nur mit Flächengewichten von mindestens 60g/m² zum Einsatz kommen können und dadurch eine relativ hohe Steifigkeit aufweisen oder dass sie mit hohen Anteilen chemischer Bindemittel verfestigt werden müssen und nur mit schwach klebenden Haftklebstoffen für medizinische Anwendungen ausgerüstet werden können. Auch dann müssen die Klebebeschichtungen noch bevorzugt mit einer Trennmittelbeschichtung versehen werden, wie dies aus der US 5,679,190 bekannt ist.

Der Nachteil der Vliese mit Trennmittelbeschichtung besteht darin, dass sie einerseits nur mit Flächengewichten von mindestens 60 g/m² zum Einsatz kommen können, wie dies aus der DE 195 23 494 A1 bekannt ist, dass sich andererseits die Antihaftbeschichtung nicht vollständig mit dem Trägermaterial verbindet, wodurch es zu einer Kontamination der Kleberoberfläche und dadurch zu einem Klebkraftverlust kommen kann, und dass drittens das zur Antihaftbeschichtung verwendete Material bei der Beschichtung das Trägermaterial durchdringt und es dadurch zu Störungen in der Klebstoffverankerung kommen kann.

Nadelvliese als Trägermaterialien mit einer durch Anschmelzen verfestigten Rückseitenoberfläche, wie sie beispielsweise in der EP 1 116 764 A2 beschrieben sind, werden an ihrer Oberfläche einseitig verfestigt, wobei sich durch das Verschmelzen der Fasern eine erhöhte Steifigkeit des Materials einstellt.

Zusammenfassend ist festzustellen, dass entsprechend dem bekannten Stand der Technik sich Nadelvliese oder Spinnvliese ohne zusätzliche Antiadhäsiv-Beschichtung nicht zu auf sich selbst gewickelten Klebebändern verarbeiten lassen. Diese Materialien neigen zum Verblocken, weil keine genügend hohe Verfestigung im Trägervlies erreicht werden kann. Insbesondere der Einsatz von Vliesen mit einem Flächengewicht von unter 60 g/m² ist unter diesem Gesichtspunkt sehr problematisch. Vliese mit einem geringen Flächengewicht werden daher mit einem Interliner abgedeckt, um die Verblockung/Verklebung des Bandes zu verhindern (vgl. hierzu beispielsweise auch JP 05 117 953 A).

Der Einsatz geprägter Vliesträger mit höheren Flächengewichten ist problematisch, insbesondere bei einem Einsatz als Kabelwickelband, da diese Träger aufgrund ihrer Steifigkeit zu einem sogenannten "Flagging" neigen, d. h. aufgrund der vorhandenen Steifigkeit des Trägers stellt sich das Bandende des Trägers nach einer längeren Lagerzeit hoch, was als Materialfehler gewertet wird. Wirkt man dem durch Verwendung stark haftender Klebstoffe entgegen, so führt dies beim Abrollen von auf sich selbst gewickelten Bändern ohne zusätzliche Trennbeschichtung zu Faserausrissen auf der Rückseite. Dies hat einen starken Klebkraftverlust und sogar die Zerstörung des Trägers zur Folge. Weiterhin nachteilig bei durch Kalandrierung / Prägung verfestigten Vliesen mit Flächengewichten über 60 g/m² ist ihre ungenügende Handeinreißbarkeit, was sie für viele Anwendungsfälle unbrauchbar macht.

Der vorliegenden Erfindung liegt die Aufgabe zugrunde, ein auf sich selbst wickelbares Klebeband der eingangs genannten Art und ein Verfahren der gattungsgemäßen Art zu seiner Herstellung zu schaffen, bei dem Vliese mit geringer Reißfestigkeit und geringem Flächengewicht einsetzbar sind, ohne dass eine zusätzliche Trennbeschichtung erfolgen müßte, und wobei die vorstehend beschriebenen Nachteile, wie insbesondere Verblocken, Flagging und Faserausrisse beim Abwickeln des Bandes, vermieden werden.

Diese Aufgabe wird mit einem Klebeband der eingangs genannten Art gelöst, bei dem das Vlies ein Flächengewicht von 10 - 50 g/m², eine Banddicke von 0,15 - 0,40 mm, eine Reißfestigkeit 10 - 35 N/cm und eine Reißdehnung von 40 - 75 % aufweist und die Klebebeschichtung aus einem chemisch oder durch ultraviolette Strahlung vernetzbaren Acrylatklebstoff besteht.

Der erfindungsgemäß eingesetzte Schmelzhaftklebstoff hat gegenüber lösemittelhaltigen Klebstoffen oder Dispersionsklebstoffen den Vorteil, dass sein Vemetzungsgrad derart eingestellt werden kann, dass eine Deaktivierung der Oberfläche der Klebstoffschicht eintritt. Dies verhindert auch ein zu starkes Eindringen / Durchdringen des Vliesträgers, was die Gefahr eines Verblockens beim Aufrollen des Bandes erhöhen würde.

Als besonders vorteilhaft wird es dabei angesehen, wenn die Klebebeschichtung mit einem Flächengewicht von 40 - 150 g/m², vorzugsweise von 70 - 130 g/m², auf den Träger aufgetragen ist, wobei insbesondere die Oberfläche des Trägers auf der Seite, auf der die Klebebeschichtung aufgetragen ist, durch die thermische Verfestigung im wesentlichen glatt ist. Infolge der thermischen Verfestigung der Oberfläche des Träges kann diese dabei eine Struktur aufweisen, wie sie durch eine Kalandrierung mit einer Prägewalze entsteht, die eine Prägefläche von 10% bis 30% aufweist.

Bei der Herstellung des erfindungsgemäßen Klebebandes können dabei mit Vorteil zum Abrollen des Klebebandes notwendige Kräfte über Zugspannungen zum Aufwickeln des Bandes eingestellt werden.

Durch den Einsatz der erfindungsgemäßen Klebebeschichtung, die mit noch nachstehend näher erläuterten Auftragsverfahren aufgebracht werden kann, sowie gegebenenfalls durch die besonderen Parameter beim Aufwickeln des Bandes ist es in überraschender Weise gelungen, ein auf sich selbst gewickeltes Klebeband mit geringem Flächengewicht und einem stark haftenden Klebstoff zu entwickeln, das sich ohne Faserausrisse abwickeln läßt, kein "Flagging" zeigt und dabei keine zusätzliche Trennbeschichtung benötigt. Der Klebstoff kann dabei vorteilhafterweise hinsichtlich Brandverhalten, Emissionsverhalten und Kompatibilität mit elektrischen Isolationswerkstoffen so ausgelegt werden, das er üblichen Anforderungen der Automobilindustrie genügt. Als Sekundärfunktion verbessert der Klebstoff die Quereinreißbarkeit des erfindungsgemäßen Klebebandes.

Als Trägermaterial werden erfindungsgemäß Spinnvliese ausgewählt, die insbesondere aus Polypropylen oder Polyesterfasern mit einer Fadenstärke von insbesondere 3Den oder Mischungen derselben gebildet sind. Vorzugsweise können diese Vliese ein Flächengewicht von 20 - 40 g/m², eine Banddicke von 0,20 - 0,30 mm, eine Reißfestigkeit 15 - 30 N/cm und eine Reißdehnung von 46 - 55 % aufweisen. Beschichtet wird vorzugsweise die glattere Seite, so dass das Band die bei einem Einsatz als Kabelwickelband in der Automobilindustrie gewünschte Geräuschdämpfungseigenschaft besitzt.

Das für den Klebstoff verwendete Auftragsverfahren richtet sich nach der Durchlässigkeit des Trägermaterials. Als Auftragsverfahren für die erfindungsgemäß eingesetzten Klebstoffe kann zunächst eine Direktbeschichtung des Trägers mittels eines Düsenauftrags eingesetzt werden. Dabei wird der flüssige Klebstoff mittels einer Pumpe, beispielsweise einer Zahnradpumpe, durch eine Breitschlitzdüse, insbesondere eine GID-Düse gedrückt. Eine GID-Düse arbeitet nach dem Prinzip der "Cuette"-Strömung. Hierdurch wird durch die bewegte Warenbahn durch Schleppströmung bei niedrigem Druckniveau soviel Masse abgeführt, wie durch eine Pumpe zugeführt wird. Hierdurch wird der hydraulische Druckaufbau im Beschichtungsspalt bei jeder Beschichtungsbreite und Maschinengeschwindigkeit konstant gehalten.

Alternativ kann in einem drucklosen Beschichtungsverfahren, z. B. in einem sogenannten "Curtain-Coating-Prozeß" der Klebstoff drucklos als geschlossener Film auf den Träger aufgebracht werden. Dadurch wird eine gleichmäßige Dicke und damit Grammatur der Klebstoffschicht erreicht. Es wird nur soviel Klebstoff aufgetragen, wie unbedingt benötigt wird. Nach erfolgter Beschichtung ist das Trägermaterial abzukühlen und auf sich selbst zu wickeln. Von großer Bedeutung ist hier die korrekte Wahl der Wickelparameter. Zu hohe Wickelspannungen führen in der Regel zu einem Verblocken der Rolle. Vorzugsweise sollte daher ein Zentrumswickler eingesetzt werden, bei dem das Drehmoment durch die Welle übertragen werden kann. Die Steuerungstechnik des Wicklers muß möglichst empfindlich ausgelegt sein, um geringen Zugspannungen zu ermöglichen.

Als weiteres Auftragsverfahren kann für die erfindungsgemäß eingesetzten Acrylatklebstoffe eine indirekte Beschichtung über einen Transferprozeß mit Hilfe eines Zwischenträgers, insbesondere bei temperaturempfindlichen und/oder für den Klebstoff durchlässigen Trägem, zum Einsatz kommen. Dazu wird zuerst ein silikonisierter Interliner (silikonisiertes Papier oder silikonisierte Polymerfolie, wie Polyolefinfolie oder Polyesterfolie), beschichtet. Anschließend wird der Klebstoff abgekühlt und das Trägermaterial zukaschiert. Soll ein auf sich selbst gewickeltes Klebeband hergestellt nach diesem Verfahren hergestellt werden, so muß bei der Konfektionierung der Rollen allerdings der Interliner, welcher als Prozeßhilfe dient, wieder von dem Trägermaterial abgezogen und separat aufgewickelt werden. Da dies mit zusätzlichem Aufwand verbunden ist, wird die Direktbeschichtung bevorzugt gewählt.

Im allgemeinen kann festgestellt werden, dass Direktbeschichtungen sich immer dann vorteilhaft durchführen lassen, wenn der Träger ausreichend dicht ist, d.h. ein Wandern der Klebstoffe durch den Träger während der Beschichtung ausgeschlossen werden kann. Außerdem muß der Träger über eine ausreichende thermische Stabilität verfügen. Transferbeschichtungen und drucklose Beschichtungen werden bevorzugt bei temperaturempfindlichen und/oder für den Klebstoff durchlässigen Trägem eingesetzt. Eine Beschädigung des Trägers und die Verschmutzung der Beschichtungswalzen während des Beschichtungsprozesses wird so vermieden.

Zur abschließenden Konfektionierung bei der Herstellung erfindungsgemäßer Klebebandrollen können ebenfalls verschiedene Verfahren angewendet werden, wobei jeweils eine beschichtete sogenannte Mutterrolle die Ausgangsbasis bildet. Bei dem ersten Verfahren, dem Abstechen von Rollen aus vorgefertigten Kurzrollen, werden aus einer Mutterrolle zunächst Kurzrollen mit vorgegebener Länge gefertigt, die dann anschließend auf die gewünschte Breite abgestochen werden. Bei dem zweiten Verfahren, dem direkten Rollenschneiden, wird das beschichtete Trägermaterial in einem Arbeitsgang abgerollt, in schmale Streifen geschnitten und schließlich zu kurzen Schmalrollen aufgewickelt. Sowohl bei dem ersten als auch bei dem zweiten Verfahren können die späteren Abrollkräfte des erfindungsgemäßen Klebebandes von der Rolle über die Zugspannung eines Wickelautomaten eingestellt werden.

Weitere vorteilhafte Ausführungen der Erfindung gehen aus den Unteransprüchen und den nachfolgenden beiden Ausführungsbeispielen hervor.

### Beispiel 1

Auf ein PP-Spinnvlies mit einem Flächengewicht von 40 g/m² wurden 80 g/m² eines UV-vemetzbaren Acrylatklebstoffes aufgebracht. Der fertig beschichtete Träger wurde mit geringer Zugspannung auf sich selbst gewickelt. Das auf diese Weise erhaltene Klebeband hatte die in der nachstehenden Tabelle 1 aufgeführten Eigenschaften.

**Tabelle 1**

| Merkmal | Methode | Einheit | Wert |
|---|---|---|---|
| Vliesart | | - | Spinnvlies |
| Material | | - | PP-Fasem |
| Flächengewicht | EN 2286-2 | g/m² | 40 |
| Klebstoff-auftragsgewicht | EN 2286-2 | g/m² | 80 |
| Materialdicke | EN 1942 | mm | ca. 0,3 |
| Mechanische Eigenschaften | | | |
| Reißdehnung, längs | EN 1941 | % | ca. 55 |
| Reißfestigkeit, längs | EN 1940 | N/cm | > 20 |
| Klebkraft, Stahl | EN 1939 | N/cm | > 2 |

Aufgrund dieser Eigenschaften und durch die insbesondere durch eine Prägung verursachte gute Geräuschdämmung eignete sich das beschriebene Klebeband besonders gut zum Umwickeln von Kabelsätzen. Es zeigte aufgrund seiner hohen Klebkraft insbesondere kein "Flagging" und durch den Klebstoff war das Trägermaterial derart verfestigt, dass es quer zur Längsrichtung des Trägers gut handeinreißbar war. Der Vemetzungsgrad des Klebstoffs und die Wickelparameter bei Beschichtung und Konfektionierung waren somit derart gewählt worden, dass ein Verblocken des Bandes nicht auftrat.

### Beispiel 2

Auf ein Polypropylen-Spinnvlies mit einem Flächengewicht von 50 g/m² wurden 90 g/m² eines UV-vemetzbaren Acrylatklebstoffes aufgebracht. Der fertig beschichtete Träger wurde mit geringer Zugspannung auf sich selbst gewickelt. Das auf diese Weise erhaltene Klebeband hatte die in der nachstehenden Tabelle 2 aufgeführten Eigenschaften.

**Tabelle 2**

| Merkmal | Methode | Einheit | Wert |
|---|---|---|---|
| Vliesart | | - | Spinnvlies |
| Material | | - | PP-Fasem |
| Flächengewicht | EN 2286-2 | g/m² | 50 |
| Klebstoff-auftragsgewicht | EN 2286-2 | g/m² | 90 |
| Materialdicke | EN 1942 | mm | ca. 0,5 |
| Mechanische Eigenschaften | | | |
| Reißdehnung, längs | EN 1941 | % | ca. 60 |
| Reißfestigkeit, längs | EN 1940 | N/cm | ca. 35 |
| Klebkraft, Stahl | EN 1939 | N/cm | > 2 |

Aufgrund dieser Eigenschaften eignete sich das beschriebene Klebeband für verschiedenartige Einsatzzwecke (sogenanntes "General Purpose Tape"). Es zeigte aufgrund seiner hohen Klebkraft insbesondere kein "Flagging". Ein Verblocken des Bandes trat ebenfalls nicht auf.

Die Erfindung beschränkt sich nicht auf die beschriebenen Ausführungsbeispiele, sondern umfaßt auch alle im Sinne der Erfindung gleichwirkenden Ausführungen. So kann es sich - wie bereits erwähnt - bei dem Trägermaterial beispielsweise auch um ein Polyesterspinnvlies handeln.

Ferner ist die Erfindung nicht auf die in den unabhängigen Ansprüchen definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass jedes Einzelmerkmal des Anspruchs 1 weggelassen bzw. durch mindestens ein an anderer Stelle offenbartes Merkmal ersetzt werden kann. Insofern ist der Anspruch 1 lediglich als ein erster Formulierungsversuch für eine Erfindung zu verstehen.

## Patentansprüche

1. Auf sich selbst wickelbares Klebeband mit einem aus einem thermisch verfestigten Vlies bestehenden bandförmigen Träger, der auf einer Seite mit einer druckempfindlichen Acrylat-Klebebeschichtung versehen ist,
**dadurch gekennzeichnet, dass** das Vlies ein Flächengewicht von 10 - 50 g/m², eine Banddicke von 0,15 - 0,40 mm, eine Reißfestigkeit von 10 - 35 N/cm und eine Reißdehnung von 40 - 75 % aufweist und die Klebebeschichtung aus einem chemisch oder durch ultraviolette Strahlung vemetzbaren Acrylatklebstoff besteht.

2. Klebeband nach Anspruch 1,
**dadurch gekennzeichnet, dass** das Vlies ein Flächengewicht von 20 - 40 g/m² aufweist.

3. Klebeband nach Anspruch 1 oder 2,
**dadurch gekennzeichnet, dass** das Vlies eine Banddicke von 0,20 - 0,30 mm aufweist.

4. Klebeband nach einem der Ansprüche 1 bis 3,
**dadurch gekennzeichnet, dass** das Vlies eine Reißfestigkeit von 15 - 30 N/cm aufweist.

5. Klebeband nach einem der Ansprüche 1 bis 4,
**dadurch gekennzeichnet, dass** das Vlies eine Reißdehnung von 46 - 55 % aufweist.

6. Klebeband nach einem der Ansprüche 1 bis 5,
**dadurch gekennzeichnet, dass** die Oberfläche des Trägers auf der Seite, auf der die Klebebeschichtung aufgetragen ist, im wesentlichen glatt ist.

7. Klebeband nach einem der Ansprüche 1 bis 6,
**dadurch gekennzeichnet, dass** die thermisch verfestigte Oberfläche des Träges eine Struktur aufweist, wie sie infolge einer Kalandrierung mit einer Prägewalze entsteht, die eine Prägefläche von 10% bis 30% aufweist.

8. Klebeband nach einem der Ansprüche 1 bis 7,
**dadurch gekennzeichnet, dass** der Träger zumindest teilweise aus einem Polypropylen besteht.

9. Klebeband nach einem der Ansprüche 1 bis 8,
**dadurch gekennzeichnet, dass** der Träger zumindest teilweise aus einem Polyester besteht.

10. Klebeband nach einem der Ansprüche 1 bis 9,
**dadurch gekennzeichnet, dass** die Klebebeschichtung mit einem Flächengewicht von 40 - 150 g/m², vorzugsweise von 70 - 130 g/m², auf den Träger aufgetragen ist.

11. Klebeband nach einem der Ansprüche 1 bis 10,
**dadurch gekennzeichnet, dass** der bandförmige Träger und die Klebebeschichtung derart aufeinander abgestimmt sind, dass der Träger einschließlich der Klebebeschichtung quer zu einer Längsrichtung des Trägers handeinreißbar ist.

12. Verwendung eines Klebebandes nach Ansprüchen 1 bis 11 zum Umwickeln von Kabelsätzen.

13. Verfahren zur Herstellung eines auf sich selbst gewickelten Klebebandes, insbesondere eines Klebebandes nach einem der Ansprüche 1 bis 12, umfassend die Verfahrensschritte
- Herstellung eines aus einem Spinnvlies bestehenden Trägers durch Extrudieren und Schmelzen eines Polymers, Spinnen und Verstrecken der Fasern aus diesem Polymer, Ablegen der Fasern auf einem Förderband und thermische Verfestigung des Vlieses,
- Auftragung einer Klebebeschichtung auf den Träger,
- Aufwickeln des Bandes und
- Konfektionierung
**dadurch gekennzeichnet, dass** die Klebebeschichtung aus chemisch oder durch ultraviolette Strahlung vemetzbaren Acrylatklebstoff hergestellt wird, wobei das Vlies ein Flächengewicht von 10 - 50 g/m² aufweist.

14. Verfahren nach Anspruch 13,
**dadurch gekennzeichnet, dass** die Klebebeschichtung mit einem Flächengewicht von 40 - 150 g/m², vorzugsweise von 70 - 130 g/m², auf den Träger aufgetragen wird.

15. Verfahren nach Anspruch 13 oder 14,
**dadurch gekennzeichnet, dass** die Klebebeschichtung direkt erfolgt, wobei insbesondere auf den Träger der flüssige Klebstoff mittels einer Pumpe durch eine Breitschlitzdüse, insbesondere eine GID-Düse gedrückt wird, wobei die Breitschlitzdüse auf dem Trägermaterial aufliegt.

16. Verfahren nach Anspruch 13 oder 14,
**dadurch gekennzeichnet, dass** eine drucklose Klebebeschichtung erfolgt, insbesondere durch ein "Curtain-Coating", wobei ein geschlossener Klebstofffilm drucklos auf das Trägermaterial fällt.

17. Verfahren nach einem der Ansprüche 13 bis 16,
**dadurch gekennzeichnet, dass** zur Auftragung der Klebebeschichtung auf einen temperaturempfindlichen und/oder für den Klebstoff durchlässigen Träger zuerst ein silikonisierter Interliner, wie ein silikonisiertes Papier oder eine silikonisierte Polymerfolie mit dem geschmolzenen Klebstoff beschichtet, anschließend der Klebstoff abgekühlt und dann das Trägermaterial zukaschiert wird.

18. Verfahren nach einem der Ansprüche 13 bis 15,
**dadurch gekennzeichnet, dass** die aufgetragene Klebebeschichtung mit einem derartig gewählten Vemetzungsgrad vernetzt wird, dass ein Verkleben von Klebebandschichten untereinander verhindert wird.

19. Verfahren nach einem der Ansprüche 13 bis 18,
**dadurch gekennzeichnet, dass** zum Abrollen des Klebebandes notwendige Kräfte über Zugspannungen zum Aufwickeln des Bandes eingestellt werden.

20. Verfahren nach einem der Ansprüche 13 bis 19,
**dadurch gekennzeichnet, dass** zum Aufwickeln des Bandes ein Zentrumswickler eingesetzt wird, bei dem ein beim Aufwickeln wirksames Drehmoment durch eine Welle übertragen und eingestellt werden kann.

21. Verfahren nach Anspruch 19 oder 20,
**dadurch gekennzeichnet, dass** zum Aufwickeln des Bandes mit einer Zugkraft von 100 - 500 N/m bei einer Anfangswickelzugkraft von 100 - 250 N/m gewickelt wird.

22. Verfahren nach einem der Ansprüche 13 bis 21,
**dadurch gekennzeichnet, dass** zur Konfektionierung des Klebebandes aus einer Mutterrolle großer Länge zunächst Kurzrollen mit vorgegebener Länge gefertigt werden, aus denen Klebebänder in gewünschter Breite abgestochen werden.

23. Verfahren nach einem der Ansprüche 13 bis 22,
**dadurch gekennzeichnet, dass** zur Konfektionierung des Klebebandes das beschichtete Trägermaterial in einem Arbeitsgang abgerollt, in schmale Streifen geschnitten und danach zu kurzen Schmalrollen in gewünschter Breite aufgewickelt wird.
